# EUROPÄISCHE PATENTSCHRIFT

(11) **EP 3 710 289 B1**
(45) Veröffentlichungstag und Bekanntmachung des Hinweises auf die Patenterteilung: **21.09.2022**
(21) Anmeldenummer: 18799692.1
(22) Anmeldetag: 30.10.2018
(51) Int. Cl.: B60G 3/06, B60K 7/00, B62D 21/10

(54) **EINZELRADANTRIEBSEINRICHTUNG FÜR EIN KRAFTFAHRZEUG SOWIE ENTSPRECHENDES KRAFTFAHRZEUG**
SINGLE-WHEEL DRIVE COMPONENT FOR A MOTOR VEHICLE AND CORRESPONDING MOTOR VEHICLE
SYSTÈME D'ENTRAÎNEMENT DE ROUE INDIVIDUEL POUR UN VÉHICULE AUTOMOBILE AINSI QUE VÉHICULE AUTOMOBILE CORRESPONDANT

(30) Priorität: 15.11.2017 DE 102017220312; 13.06.2018 DE 102018209418
(43) Veröffentlichungstag der Anmeldung: 23.09.2020
(73) Patentinhaber: Audi AG, 85045 Ingolstadt (DE)
(72) Erfinder: SCHMALZRIETH, Sven, 201106 Shanghai (CN); VALLURI, Advait, 85057 Ingolstadt (DE); IDELEVITCH, Vladimir, 90471 Nürnberg (DE); WILDE, Marcus, 01139 Dresden (DE)
(86) Internationale Anmeldenummer: PCT/EP2018/079757
(87) Internationale Veröffentlichungsnummer: WO 2019/096580

(56) Entgegenhaltungen:
- WO-A1-2012/113500
- CN-A- 105 882 741
- DE-A1-102004 022 242
- DE-A1-102010 023 985
- DE-A1-102012 011 797
- DE-A1-102012 019 870
- DE-A1-102013 007 976
- DE-A1-102014 102 541
- DE-A1-102016 007 496
- FR-A1- 2 691 930

## Beschreibung

Die Erfindung betrifft eine Einzelradantriebseinrichtung für ein Kraftfahrzeug, mit einem Antriebsaggregat und einem Radträger, an dem eine von dem Antriebsaggregat antreibbare Radnabe mittels eines Radlagers drehbar gelagert ist, wobei von dem Antriebsaggregat zumindest eine Aggregatstütze zur Lagerung des Antriebsaggregats an einer Karosserie des Kraftfahrzeugs ausgeht. Die Erfindung betrifft weiterhin ein Kraftfahrzeug.

Aus dem Stand der Technik ist beispielsweise die Druckschrift DE 10 2012 019 870 A1 bekannt. Diese zeigt eine Radaufhängung für ein Hinterrad eines Kraftfahrzeugs, umfassend einen Radträger, der über einen oberen Querlenker und einen unteren Querlenker an einem Modulträger angelenkt ist, wobei die beiden Querlenker jeweils um eine Schwenkachse schwenkbar am Modulträger gelagert sind. Dabei ist vorgesehen, dass die beiden Schwenkachsen der Querlenker parallel zueinander und parallel zur Fahrbahn sowie parallel zur Fahrzeuglängsrichtung angeordnet sind, und dass der Radträger mit einem Spursteller in Wirkverbindung steht, wobei der Spursteller am unteren Querlenker abgestützt gelagert ist.

Weiterhin ist aus der Druckschrift WO 2014/195105 A1 ein Fahrzeug bekannt, umfassend eine Karosserie, ein unter der Karosserie angeordnetes Flächenbauteil, und zumindest eine Achsträgeranordnung für zwei vordere oder zwei hintere Radaufhängungen, mit einer linken Lenkeraufnahme zur Anbindung zumindest eines Lenkers der linken Radaufhängung, und einer rechten Lenkeraufnahme zur Anbindung zumindest eines Lenkers der rechten Radaufhängung, wobei die beiden Lenkeraufnahmen jeweils an der Karosserie und an dem Flächenbauteil befestigt sind, wobei die beiden Lenkeraufnahmen zwei separate, nicht direkt verbundene Bauteile sind, und wobei das Flächenbauteil als Unterboden, vorzugsweise als unterer aerodynamisch optimierter Abschluss des Fahrzeugs, ausgebildet ist.

Weiterhin ist aus der DE 10 2013 007976 A1 eine Einzelradantriebseinrichtung entsprechend dem Oberbegriff des Anspruchs 1 vorbekannt.

Es ist Aufgabe der Erfindung, eine Einzelradantriebseinrichtung für ein Kraftfahrzeug vorzuschlagen, welche gegenüber bekannten Einzelradantriebseinrichtungen Vorteile aufweist, insbesondere verbesserte Akustikeigenschaften aufweist.

Dies wird erfindungsgemäß mit einer Einzelradantriebseinrichtung für ein Kraftfahrzeug mit den Merkmalen des Anspruchs 1 erreicht.

Die Einzelradantriebseinrichtung dient dem Antreiben des Kraftfahrzeugs, also einem Bereitstellen eines auf das Antreiben des Kraftfahrzeugs gerichteten Drehmoments. Das Drehmoment wird hierbei vorzugsweise über lediglich genau ein Rad übertragen, beziehungsweise an diesem Rad bereitgestellt. Die Einzelradantriebseinrichtung bildet insoweit einen Einzelradantrieb des Kraftfahrzeugs. Das Rad ist mit der Radnabe verbindbar beziehungsweise mit ihr verbunden. Das Antreiben des Rads erfolgt über die Radnabe. Zum Antreiben der Radnabe verfügt die Einzelradantriebseinrichtung über das Antriebsaggregat, welches mit der Radnabe zumindest zeitweise, vorzugsweise permanent, wirkverbunden, insbesondere drehfest wirkverbunden ist. Das Antriebsaggregat liegt bevorzugt in Form einer elektrischen Maschine vor, welche auch als Traktionsmaschine bezeichnet werden kann. Zur drehbaren Lagerung der Radnabe weist die Einzelradantriebseinrichtung das Radlager auf, über welches die Radnabe an dem Radträger drehbar gelagert ist, welcher ebenfalls Bestandteil der Einzelradantriebseinrichtung ist.

Die Einzelradantriebseinrichtung beziehungsweise ihre einzelnen Bestandteile sind mit einer Karosserie des Kraftfahrzeugs verbindbar beziehungsweise nach erfolgter Montage mit ihr verbunden. Hierzu weist das Antriebsaggregat mehrere Aggregatstützen sowie mehrere weitere Aggregatstützen auf, über welche das Antriebsaggregat mit der Karosserie verbunden ist. Die mehreren Aggregatstützen und die mehreren weiteren Aggregatstützen gehen vorzugsweise von einem Maschinengehäuse des Antriebsaggregats aus und erstrecken sich besonders bevorzugt bezüglich einer Drehachse einer Antriebswelle des Antriebsaggregats in radialer Richtung ausgehend von dem Maschinengehäuse nach außen. An den mehreren Aggregatstützen und den weiteren Aggregatstützen liegt jeweils das Aggregatlager vor, sodass die Lagerung des Antriebsaggregats an der Karosserie elastisch ist. Hierzu ist das Aggregatlager entsprechend ausgestaltet.

Das Aggregatlager dient der Dämpfung von Schwingungen zwischen dem Antriebsaggregat und der Karosserie. Das Aggregatlager verhindert insoweit, dass Schwingungen von dem Antriebsaggregat an die Karosserie übertragen werden, sodass eine Beeinträchtigung eines Fahrkomforts durch derartige Schwingungen verringert oder sogar gänzlich eliminiert wird. Bevorzugt wird eine Ausgestaltung des Aggregatlagers als Hydroaggregatlager, weil dieses eine besonders effiziente Schwingungsdämpfung realisiert.

Zusätzlich zur Lagerung des Antriebsaggregats an der Karosserie ist es notwendig, auch den Radträger an der Karosserie zu lagern beziehungsweise abzustützen. Bekannt ist es hierbei, den Radträger über einen oder mehrere Lenker an der Karosserie anzulenken, sodass also der oder die Lenker einerseits an dem Radträger und andererseits unmittelbar an der Karosserie angreifen. Erfindungsgemäß ist es hingegen vorgesehen, dass der wenigstens eine Lenker einerseits an dem Radträger und andererseits an der Aggregatstütze angelenkt ist.

Der Lenker greift also einerseits (unmittelbar) an dem Radträger und andererseits (unmittelbar) an der Aggregatstütze an. Das bedeutet in anderen Worten, dass der Lenker über die mehreren Aggregatstützen und die weiteren mehreren Aggregatstützen an der Karosserie angelenkt ist. Entsprechend liegt der Lenker bevorzugt während eines bestimmungsgemäßen Betriebs der Einzelradantriebseinrichtung beziehungsweise des Kraftfahrzeugs stets beabstandet von der Karosserie vor, liegt also nicht an dieser an oder greift an ihr an.

Das Anlenken des Lenkers an den mehreren Aggregatstützen und den weiteren mehreren Aggregatstützen hat den Vorteil, dass der Lenker schlussendlich über das Aggregatlager an der Karosserie gelagert wird. Entsprechend bewirken die Aggregatlager nicht lediglich eine Schwingungsdämpfung zwischen dem Antriebsaggregat und der Karosserie, sondern zusätzlich zwischen dem Lenker und mithin dem Radträger einerseits und der Karosserie andererseits. Der Lenker ist bevorzugt als Querlenker ausgestaltet. Er kann alternativ jedoch auch als Längslenker vorliegen. Zusätzlich kann sich - in Abhängigkeit von der Auslegung des Aggregatlagers - ein weiterer positiver Effekt ergeben, welcher einem Fahrkomfort des Kraftfahrzeugs zuträglich ist. Aufgrund der Abstützung des Radträgers an der Karosserie über das wenigstens eine Aggregatlager kann bei Einwirkung einer Seitenkraft auf das Kraftfahrzeug beziehungsweise die Einzelradantriebseinrichtung, also einer Kraft in Richtung der Drehachse der Antriebswelle des Antriebsaggregats, ein Eindrehen der gesamten Einzelradantriebseinrichtung bezüglich der Karosserie um eine auf der Drehachse senkrecht stehenden Achse erfolgen. Dieses Eindrehen erfolgt aufgrund der Elastizität des Aggregatlagers ebenfalls elastisch, sodass schlussendlich ein vorteilhaftes elastokinematisches Verhalten der Einzelradantriebseinrichtung erzielt wird.

Erfindungsgemäß ist vorgesehen mehrere Aggregatstützen zur Lagerung des Antriebsaggregats an der Karosserie des Kraftfahrzeugs zu verwenden. Dabei sind erfindungsgemäß mehrere Lenker zur Lagerung des Radträgers an den Aggregatstützen und mithin der Karosserie vorgesehen. Erfindungsgemäß greifen nun die mehreren Lenker an unterschiedlichen Aggregatstützen an. Hierbei greifen erfindunsgemäß an allen der Aggregatstützen jeweils wenigstens einer der Lenker an. Das bedeutet schlussendlich, dass der Radträger über mehrere Lenker mit mehreren der Aggregatstützen verbunden beziehungsweise an diesen angelenkt ist.

Jeder der mehreren Lenker kann beispielsweise jeweils als Stablenker oder als Dreieckslenker ausgestaltet sein. Im Falle des Stablenkers stellt der Lenker vorzugsweise eine Verbindung zwischen dem Radträger und eine der mehreren Aggregatstützen und/oder einer der mehreren weiteren Aggregatstützen her. Ist der Lenker hingegen als Dreieckslenker ausgestaltet, so kann es vorgesehen sein, dass er einerseits an dem Radträger angreift beziehungsweise an diesem angelenkt ist und andererseits an mehreren der Aggregatstützen jeweils angelenkt ist. Über den Dreieckslenker ist insoweit der Radträger mit mehreren der Aggregatstützen verbunden beziehungsweise an ihnen angelenkt.

Die Einzelradantriebseinrichtung stellt einen Bestandteil des Kraftfahrzeugs dar. Hierbei ist es vorzugsweise vorgesehen, dass das Kraftfahrzeug mehrere derartiger Einzelradantriebseinrichtungen aufweist, wobei jede der Einzelradantriebseinrichtungen gemäß den Ausführungen im Rahmen dieser Beschreibung ausgestaltet sein kann. Liegen mehrere Einzelradantriebseinrichtungen vor, so sind bevorzugt wenigstens einer Radachse des Kraftfahrzeugs mehrere Einzelradantriebseinrichtung, bevorzugt genau zwei Einzelradantriebseinrichtungen zugeordnet, wobei die Einzelradantriebseinrichtungen unterschiedlichen Fahrspuren des Kraftfahrzeugs zugeordnet sind.

Die Einzelradantriebseinrichtungen können genau einer von mehreren Radachsen des Kraftfahrzeugs zugeordnet sein. Besonders bevorzugt sind jedoch mehreren Radachsen, insbesondere allen Radachsen, des Kraftfahrzeugs jeweils mehrere Einzelradantriebseinrichtungen zugeordnet. Das Kraftfahrzeug kann insoweit über mehrere angetriebene Radachsen verfügen. Beispielsweise liegt das Kraftfahrzeug in Form eines Allradkraftfahrzeugs vor, bei welchem alle Räder des Kraftfahrzeugs jeweils mittels einer Einzelradantriebseinrichtung antreibbar sind.

Eine bevorzugte weitere Ausführungsform der Erfindung sieht vor, dass an einer an Aggregatstützen und/oder an einer der weiteren Aggregatstützen starr befestigten Lagerkonsole ein Lager befestigt ist, über das der jeweilige Lenker an der jeweiligen Aggregatstütze und/oder an der jeweiligen weiteren Aggregatsstütze angelenkt ist. An einer der Aggregatstützen und/oder an einer der weiteren Aggregatstützen ist also die Lagerkonsole ausbildet und starr mit ihr verbunden beziehungsweise befestigt. Die Lagerkonsole kann hierbei separat von einer der Aggregatstützen und/oder einer der weiteren Aggregatstützen ausgebildet und nachfolgend an ihr befestigt sein, beispielsweise stoffschlüssig befestigt, insbesondere durch Schweißen. Es kann jedoch auch vorgesehen sein, dass die Lagerkonsole einstückig und/oder materialeinheitlich mit einer der Aggregatstützen und/oder einer der weiteren Aggregatstützen ausgebildet ist, beispielsweise durch eine Umformung der Aggregatstütze.

Über die Lagerkonsole ist das Lager an einer der Aggregatstützen und/oder an einer der weiteren Aggregatstützen befestigt. Das Lager dient der schwenkbaren Lagerung des Lenkers an einer der Aggregatstützen und/oder an einer der weiteren Aggregatstützen. Das Lager liegt insoweit als Schwenklager vor, welches eine verschwenkbare Lagerung des Lenkers, insbesondere um eine Schwenkachse verschwenkbar an einer der Aggregatstützen und/oder an einer der weiteren Aggregatstützen realisiert. Aufgrund der Lagerung des Lenkers an einer der Aggregatstützen und/oder an einer der weiteren Aggregatstützen mittels des Lagers wird ein besonders hoher Fahrkomfort des Kraftfahrzeugs erzielt.

Eine Weiterbildung der Erfindung sieht vor, dass das Lager als Gummilager, Gummimetalllager oder als Kugelgelenklager ausgestaltet ist. Diesen Lagertypen ist gemein, dass sie eine Schwenkbewegung des Lenkers bezüglich einer der Aggregatstützen und/oder einer der weiteren Aggregatstützen um die Schwenkachse zulassen. Eine translatorische Auslenkung des Lenkers bezüglich einer der Aggregatstützen und/oder einer der weiteren Aggregatstützen beispielsweise in axialer, radialer und/oder tangentialer Richtung, und/oder eine Schwenkbewegung um eine von der Schwenkachse verschiedenen Achse, beispielsweise um eine auf der Schwenkachse senkrecht stehenden Achse, wird von dem Lager ausschließlich elastisch zugelassen. Das bedeutet, dass das Lager auf den Lenker bei einer derartigen Auslenkung eine Rückstellkraft bewirkt. Dies gilt insbesondere im Falle der translatorischen Auslenkung. Im Rahmen einer weiteren bevorzugten Ausführungsform der Erfindung kann vorgesehen sein, dass die Aggregatstützen und/oder die weiteren Aggregatstützen zumindest bereichsweise ein Rohrprofil aufweisen. Die Aggregatstützen und/oder die weiteren Aggregatstützen liegen also als Hohlprofil vor, welches im Querschnitt gesehen bevorzugt vollständig geschlossen ist, insbesondere entlang seiner gesamten Längserstreckung. Das bedeutet schlussendlich, dass die Aggregatstützen und/oder die weiteren Aggregatstützen sind beziehungsweise eine vorzugsweise in axialer Richtung durchgehenden Hohlraum aufweisen.

Dies ermöglicht zum einen eine deutliche Gewichtsreduzierung gegenüber einer massiven Ausgestaltung der Aggregatstütze und zum anderen eine einfache Herstellung, weil die Aggregatstützen und/oder die weiteren Aggregatstützen aufgrund der Ausgestaltung als Rohrprofil beziehungsweise Hohlprofil einfach umgeformt werden können.

Das Umformen erfolgt bevorzugt derart, dass sich die Aggregatstützen und/ oder die weiteren Aggregatstützen nach der Montage an dem Kraftfahrzeug an weiteren Komponenten der Einzelradantriebseinrichtung beziehungsweise des Kraftfahrzeugs anliegen beziehungsweise anschmiegen oder an ihnen beabstandet vorbeilaufen. Zudem ermöglicht das Umformen der Aggregatstützen und/oder der weiteren Aggregatstützen das Einfangen eines Kinematikpunkts des Lenkers in unterschiedlichen Raumlagen, indem die Aggregatstützen und/oder die weiteren Aggregatstützen räumlich derart umgeformt werden, dass die an ihren befestigte Lagerkonsole einen Schwerpunkt des Lenkers einfängt.

Eine weitere bevorzugte Ausführungsform der Erfindung sieht vor, dass an dem Antriebsaggregat ein Befestigungsflansch ausgebildet ist, an denen die Aggregatstützen und/oder weiteren Aggregatstützen befestigt sind. Unter dem Befestigungsflansch ist ein Vorsprung zu verstehen, der über einen Außenumfang eines Maschinengehäuses des Antriebsaggregats übersteht beziehungsweise von diesem ausgeht. Der Befestigungsflansch stellt insoweit beispielsweise eine Materialverdickung des Maschinengehäuses dar. Der Befestigungsflansch kann separat von dem Maschinengehäuse ausgebildet und nachträglich an ihm befestigt sein, bevorzugt stoffschlüssig, insbesondere durch Schweißen. Es kann jedoch auch vorgesehen sein, dass der Befestigungsflansch gemeinsam mit dem Maschinengehäuse ausgebildet wird. Insoweit liegt der Befestigungsflansch einstückig und materialeinheitlich mit dem Maschinengehäuse vor.

Der Befestigungsflansch ist bevorzugt für eine lösbare Befestigung der Aggregatstützen und/oder weiteren Aggregatstützen vorgesehen und ausgebildet. Hierunter ist zu verstehen, dass die Aggregatstützen und/oder die weiteren Aggregatstützen nach ihrer Montage beschädigungsfrei von dem Befestigungsflansch lösbar sind. Beispielsweise sind die Aggregatstützen und/oder die weiteren Aggregatstützen formschlüssig an dem Befestigungsflansch befestigt und zusätzlich an ihm gesichert, beispielsweise mittels einer Schraubverbindung. Es kann jedoch auch vorgesehen sein, dass die Aggregatstützen und/oder weiteren Aggregatstützen ausschließlich über eine solche Schraubverbindung an dem Befestigungsflansch befestigt sind. In diesem Fall kann der Befestigungsflansch auch als Schraubflansch bezeichnet werden. Das Ausbilden des Befestigungsflanschs an dem Antriebsaggregat hat den Vorteil, dass eine einfache und zuverlässige Anbindung der Aggregatstützen und/oder der weiteren Aggregatstützen an das Antriebsaggregat sichergestellt ist.

Erfindungsgemäß ist vorgesehen, dass zusätzlich zu den mehreren Aggregatstützen mehrere weitere Aggregatstütze von dem Antriebsaggregat ausgehen, an denen jeweils ein weiteres Aggregatlager zur elastischen Lagerung des Antriebsaggregats an der Karosserie angeordnet ist. Die weiteren Aggregatstützen sind analog zu den Aggregatstützen ausgebildet, sodass die Ausführungen zu den Aggregatstützen im Rahmen dieser Beschreibung erfindungsgemäß einzeln oder in Kombination miteinander auf die weitere Aggregatstütze übertragen werden. Die weitere Aggregatstütze ist insoweit gemäß diesen Ausführungen weitergebildet. Auch die weiteren Aggregatstützen dienen der elastischen Lagerung des Antriebsaggregats an der Karosserie. Hierzu geht sie von dem Antriebsaggregat beziehungsweise dessen Maschinengehäuse aus und weist andererseits das weitere Aggregatlager auf. Auch hinsichtlich des weiteren Aggregatlagers wird auf die Ausführungen zu dem Aggregatlager im Rahmen dieser Beschreibung verwiesen.

Nach einer Montage der Einzelradantriebseinrichtung an dem Kraftfahrzeug ist insoweit das Antriebsaggregat sowohl über die Aggregatstützen als auch über die weiteren Aggregatstützen mit der Karosserie des Kraftfahrzeugs verbunden, nämlich über jeweilige Aggregatlager und jeweilige weitere Aggregatlager schwingungsdämpfend verbunden. Die Verwendung mehrerer Aggregatstützen und mehrerer Aggregatlager hat den Vorteil, dass die über jede der Aggregatstützen beziehungsweise jedes der Aggregatlager übertragene Energiemenge aufgeteilt wird, sodass schlussendlich ein höherer Fahrkomfort realisiert ist.

Eine bevorzugte Weiterbildung der Erfindung sieht vor, dass eine der Aggregatstützen und eine der weiteren Aggregatstützen separat voneinander oder über einen gemeinsamen Befestigungsfuß an dem Antriebsaggregat befestigt sind. Die eine der Aggregatstützen und die eine der weiteren Aggregatstützen können also als separate Bauteile vorliegen und ebenfalls separat voneinander an dem Befestigungsflansch beziehungsweise dem Antriebsaggregat befestigt sein. Dies hat den Vorteil, dass die Einzelradantriebseinrichtung modular ausgestaltet und flexibel herstellbar ist.

Im Falle der separaten Befestigung einer der Aggregatstützen und einer der weiteren Aggregatstützen an dem Antriebsaggregat können eine der Aggregatstützen und eine der weiteren Aggregatstützen beabstandet voneinander bezüglich des Antriebsaggregats angeordnet sein. Beispielsweise liegen die beiden Aggregatstützen auf gegenüberliegenden Seiten des Antriebsaggregats vor, besonders bevorzugt greifen sie einander diametral gegenüberliegend an dem Antriebsaggregat beziehungsweise dessen Maschinengehäuse an.

Alternativ kann es auch vorgesehen sein, dass eine der Aggregatstützen und eine der weiteren Aggregatstützen den gemeinsamen Befestigungsfuß haben und über diesen an dem Befestigungsflansch befestigt sind. In dem Befestigungsfuß sind eine der Aggregatstützen und eine der weiteren Aggregatstützen einstückig ausgestaltet, laufen also in dem Befestigungsfuß zusammen. Über den Befestigungsfuß sind also eine der Aggregatstützen und eine der weiteren Aggregatstützen gemeinsam an dem Befestigungsflansch befestigt beziehungsweise befestigbar. Dies vereinfacht eine Montage der Aggregatstützen an dem Antriebsaggregat deutlich.

Im Rahmen einer besonders bevorzugten weiteren Ausführungsform der Erfindung ist vorgesehen, dass eine der Aggregatstützen und eine der weiteren Aggregatstützen durch einstückige und materialeinheitliche Ausgestaltung gemeinsam als ein Aggregatstützbauteil vorliegen. Vorstehend wurde bereits auf die Möglichkeit des gemeinsamen Befestigungsfußes hingewiesen. Die Ausgestaltung als Aggregatstützbauteil ist insbesondere vorteilhaft, wenn mehrere Aggregatstützen und/oder mehrere weitere Aggregatstützen vorliegen. In diesem Fall ist eine besonders einfache Montage der Einzelradantriebseinrichtung gewährleistet. Das Aggregatstützbauteil kann hierbei Bestandteil des Maschinengehäuses des Antriebsaggregats sein oder dieses zumindest bereichsweise mit ausbilden.

Schließlich ist im Rahmen einer nicht beanspruchten Ausgestaltung vorgesehen, dass an einer der Aggregatstützen und/oder an einer der weiteren Aggregatstützen eine Halterung für ein Zusatzaggregat vorliegt, oder dass an einer der Aggregatstützen und/oder einer der weiteren Aggregatstützen das Zusatzaggregat befestigt ist. Das Zusatzaggregat kann grundsätzlich beliebig ausgestaltet sein. Beispielsweise ist es ein elektrisches oder elektronisches Aggregat. Das Zusatzaggregat liegt beispielsweise in Form eines Steuergeräts, insbesondere eines Fahrwerksteuergeräts, einer Pumpe, eines Kompressors, eines Kondensators oder eines Ausgleichsbehälters vor.

Das Zusatzaggregat kann zur unmittelbaren Befestigung an der Halterung beziehungsweise einer der Aggregatstützen und/oder einer der weiteren Aggregatstützen vorgesehen und ausgebildet sein. Es kann jedoch auch vorgesehen sein, dass lediglich eine mittelbare Befestigung des Zusatzaggregats an der Halterung beziehungsweise eine der Aggregatstützen und eine der weiteren Aggregatstützen umgesetzt ist. Beispielsweise kann das Zusatzaggregat über wenigstens ein Lagerelement mit der Halterung verbunden sein, wobei das Lagerelement bevorzugt schwingungsdämpfend ist. Die Halterung liegt beispielsweise in Form einer Befestigungskonsole für das Zusatzaggregat vor. Die Integration des Zusatzaggregats in die Einzelradantriebseinrichtung für das Kraftfahrzeug ermöglicht eine besonders kompakte und platzsparende Ausgestaltung.

Die Erfindung betrifft weiterhin ein Kraftfahrzeug mit einer Einzelradantriebseinrichtung gemäß dem Anspruch 1.

Auf die Vorteile einer derartigen Ausgestaltung der Einzelradantriebseinrichtung beziehungsweise des Kraftfahrzeugs wurde bereits hingewiesen. Sowohl das Kraftfahrzeug als auch die Einzelradantriebseinrichtung können gemäß den Ausführungen im Rahmen dieser Beschreibung weitergebildet sein, sodass insoweit auf diese verwiesen wird.

Die Erfindung wird nachfolgend anhand der Zeichnung näher erläutert, ohne dass eine Beschränkung der Erfindung erfolgt. Dabei zeigt:
- Figur 1: eine schematische Darstellung eines Bereichs einer Einzelradantriebseinrichtung für ein Kraftfahrzeug,
- Figur 2: eine schematische Darstellung der Einzelradantriebseinrichtung, wobei eine Halterung für ein Zusatzaggregat vorliegt, sowie
- Figur 3: eine schematische Darstellung der Einzelradantriebseinrichtung, wobei an der Halterung das Zusatzaggregat angeordnet und befestigt ist.

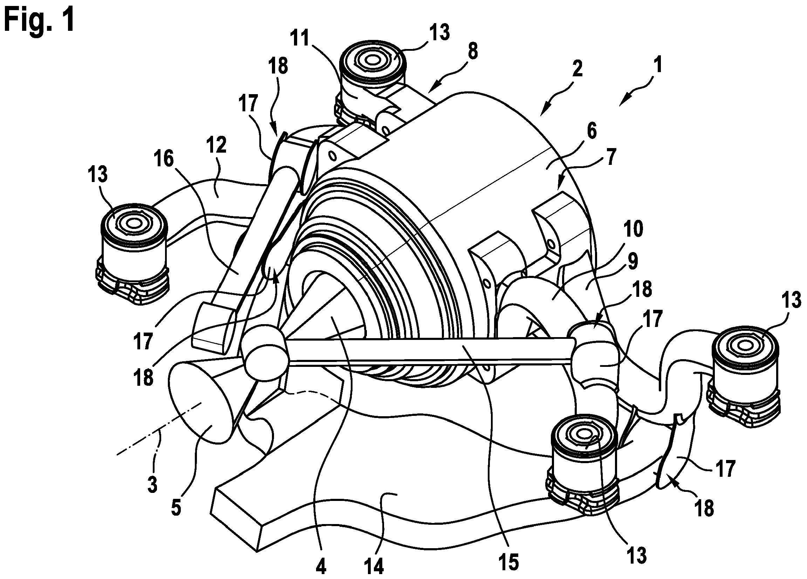

Die Figur 1 zeigt eine schematische Darstellung eines Bereichs einer Einzelradantriebseinrichtung 1 für ein Kraftfahrzeug. Die Einzelradantriebseinrichtung 1 verfügt über ein Antriebsaggregat 2, das eine um eine Drehachse 3 drehbare Antriebswelle 4 aufweist. Die Antriebswelle 4 ist vorzugsweise starr mit einer Gelenkwelle 5 gekoppelt, welche hier lediglich stark vereinfacht dargestellt ist, oder als Gelenkwelle 5 ausgestaltet. Über die Gelenkwelle 5 ist das Antriebsaggregat 2 beziehungsweise eine Antriebswelle 4 mit einer hier nicht dargestellten Radnabe der Einzelradantriebseinrichtung 1 verbunden.

Das Antriebsaggregat 2 weist ein Maschinengehäuse 6 auf, an welchem Befestigungsflansche 7 und 8 ausgebildet sind. Beispielsweise liegen die Befestigungsflansche 7 und 8 einstückig und materialeinheitlich mit dem Maschinengehäuse 6 vor. Über die Befestigungsflansche 7 und 8 greifen Aggregatstützen 9 und 11 sowie weitere Aggregatstützen 10 und 12 an dem Maschinengehäuse 6 beziehungsweise dem Antriebsaggregat 2 an.

Beabstandet von dem Antriebsaggregat 2 weisen die Aggregatstützen 9, 10, 11 und 12 jeweils ein Aggregatlager 13 auf. Über die Aggregatlager 13 sind die Aggregatstützen 9, 10, 11 und 12 und mithin das Antriebsaggregat 2 mit einer hier nicht dargestellten Karosserie des Kraftfahrzeugs koppelbar, nämlich schwingungsdämpfend koppelbar. Die Aggregatlager 13 sind hierzu elastisch und liegen beispielsweise als Hydroaggregatlager vor. Zur Lagerung des hier nicht dargestellten Radträgers, an welchem mittels eines Radlagers eine Radnabe gelagert ist, sind Lenker 14 und 15 sowie ein weiterer Lenker 16 vorgesehen. Die Lenker 14, 15 und 16 greifen jeweils einerseits an dem Radträger an und andererseits an wenigstens einer der Aggregatstützen 9, 10, 11 und 12.

In dem hier dargestellten Ausführungsbeispiel liegt der Lenker 14 als Dreieckslenker vor. Entsprechend ist er an mehreren der Aggregatstützen 9, 10, 11 und 12 angelenkt, nämlich an der Aggregatstütze 9 und der Aggregatstütze 11. Die Lenker 15 und 16 sind hingegen als Stablenker ausgebildet. Der Lenker 15 greift an der weiteren Aggregatstütze 10 und der weitere Lenker 16 an der weiteren Aggregatstütze 12 an.

Zur Anbindung der Lenker 14, 15 und 16 an die Aggregatstützen 9, 10, 11 und 12 ist an den Aggregatstützen 9, 10, 11 und 12 jeweils eine Lagerkonsole 17 ausgebildet, in welchen jeweils ein hier nicht im Detail dargestelltes Lager 18 gehalten ist. Über die Lager 18 sind die Lenker 14, 15 und 16 jeweils schwenkbeweglich an der entsprechenden Aggregatstütze 9, 10, 11 beziehungsweise 12 beziehungsweise den jeweiligen Aggregatstützen 9, 10, 11 und 12 gelagert. Die Lager 18 können als Gummilager, Gummimetalllager oder als Kugelgelenklager ausgestaltet sein.

Es ist erkennbar, dass die Aggregatstützen 9 und 10 einerseits sowie die Aggregatstützen 11 und 12 andererseits jeweils separat voneinander an dem entsprechenden Befestigungsflansch 7 beziehungsweise 8 befestigt sind. Es kann jedoch auch eine gemeinsame Befestigung realisiert sein, beispielsweise weisen hierzu die Aggregatstützen 9 und 10 beziehungsweise die Aggregatstützen 11 und 12 jeweils einen gemeinsamen Befestigungsfuß auf.

Die hier beschriebene Ausgestaltung der Einzelradantriebseinrichtung 1 sieht eine Anbindung des Radträgers an die Karosserie über die Aggregatstützen 9, 10, 11 und 12 und mithin die Aggregatlager 13 vor. Entsprechend ist eine optimale schwingungsdämpfende Ausgestaltung beziehungsweise Anbindung umgesetzt, sodass ein hoher Fahrkomfort des Kraftfahrzeugs gewährleistet ist.

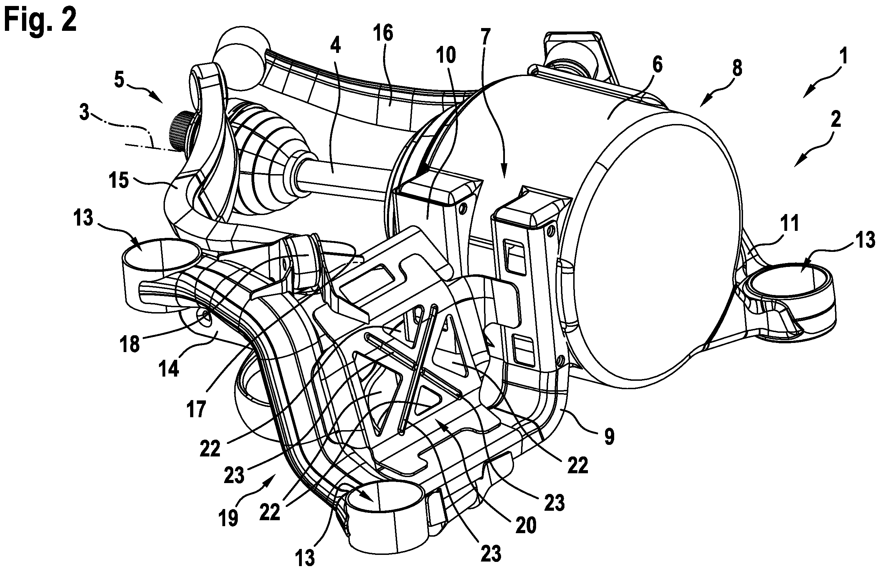

Die Figur 2 zeigt eine schematische Darstellung der Einzelradantriebseinrichtung 1 in einer anderen Ansicht und einer leicht unterschiedlichen Ausgestaltung. Grundsätzlich wird auf die vorstehenden Ausführungen verwiesen und nachfolgend lediglich auf die Unterschiede eingegangen. Diese liegen darin, dass die Aggregatstützen 9 und 10 einerseits sowie die Aggregatstützen 11 und 12 andererseits jeweils gemeinsam als ein Aggregatstützbauteil 19 ausgebildet sind.

Zusätzlich oder alternativ zu der einstückigen und materialeinheitlichen Ausgestaltung der Aggregatstützen 9 und 10 als Aggregatstützbauteil 19 liegt an der Aggregatstütze 9 und/oder 10, in dem hier dargestellten Ausführungsbeispiel an beiden gemeinsam, eine Halterung 20 für ein Zusatzaggregat 21 (nicht dargestellt) vor. Die Halterung 20 ist auf der den Lenkern 14, 15 und 16 abgewandten Seite der Aggregatstützen 9 und 10 angeordnet und ausgebildet. In axialer Richtung bezüglich der Drehachse 3 liegt die Halterung 20 zwischen Befestigungsstellen vor, an welchen die Aggregatstützen 9 und 10 an den Befestigungsflansch 7 angeordnet und befestigt sind.

Die Halterung 20 liegt beispielsweise in Form eines Blechteils vor, welches an voneinander beabstandeten Stellen an der Aggregatstütze 9 befestigt ist.

Zusätzlich oder alternativ kann die Halterung 20 an voneinander beabstandeten Stellen an der Aggregatstütze 10 befestigt sein. Das Befestigen der Halterung 20 an der Aggregatstütze 9 und/oder der Aggregatstütze 10 erfolgt vorzugsweise stoffschlüssig. Auch eine formschlüssige Befestigung kann jedoch zusätzlich oder alternativ realisiert sein. Die Halterung 20 kann wenigstens eine Durchtrittsöffnung 22 aufweisen, in dem hier dargestellten Ausführungsbeispiel vier Durchtrittsöffnungen 22. Diese dienen zur Gewichtsreduzierung und zur Belüftung des Zusatzaggregats 21. Zusätzlich oder alternativ kann die Halterung 20 eine oder mehrere Sicken 23 aufweisen, welche einer Versteifung der Halterung 20 dienen.

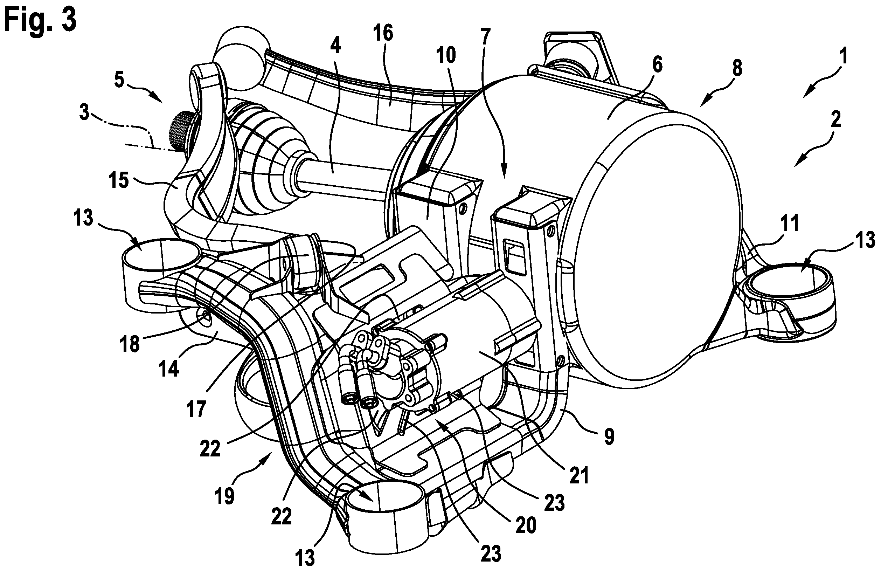

Die Figur 3 zeigt eine weitere Darstellung der vorstehend beschriebenen Einzelradantriebseinrichtung 1. Es ist erkennbar, dass nun das Zusatzaggregat 21 an der Halterung 20 befestigt ist. Das Zusatzaggregat 21 liegt in dem hier dargestellten Ausführungsbeispiel als Pumpe vor, welche beispielsweise zum Betreiben eines aktiven Fahrwerks vorgesehen und ausgebildet ist. Die Integration des Zusatzaggregats 21 in die Einzelradantriebseinrichtung 1 beziehungsweise seine Befestigung an den Aggregatstützen 9 und 10 ermöglicht eine besonders platzsparende Ausgestaltung und bietet zudem einen guten Schutz für das Zusatzaggregat 21 vor äußeren Einflüssen.

## Patentansprüche

1. Einzelradantriebseinrichtung (1) für ein Kraftfahrzeug, wobei die Einzelradantriebseinrichtung (1) über ein Antriebsaggregat (2) und einen Radträger verfügt, wobei an dem Radträger eine von dem Antriebsaggregat (2) antreibbare Radnabe mittels eines Radlagers drehbar gelagert ist, wobei von dem Antriebsaggregat (2) mehrere Aggregatstützen (9,11) sowie mehrere weitere Aggregatstützen (10,12) zur Lagerung des Antriebsaggregats (2) an einer Karosserie des Kraftfahrzeugs ausgehen, wobei an den Aggregatstützen (9,11) und den weiteren Aggregatstützen (10,12) jeweils ein Aggregatlager (13) zur elastischen Lagerung des Antriebsaggregats (2) an der Karosserie angeordnet ist, **dadurch gekennzeichnet, dass** zur Lagerung des Radträgers an den Aggregatstützen (9,11) und den weiteren Aggregatstützen (10,12) mehrere Lenker (14,15,16) vorgesehen sind, die jeweils einerseits an dem Radträger und andererseits an wenigstens einer der Aggregatstützen (9,11) und der weiteren Aggregatstützen (10,12) angelenkt sind, wobei an allen der Aggregatstützen (9,11) und der weiteren Aggregatstützen (10,12) jeweils wenigstens ein Lenker (14,15,16) der mehreren Lenker (14,15,16) angelenkt ist.

2. Einzelradantriebseinrichtung nach Anspruch 1, **dadurch gekennzeichnet, dass** an einer an einer der Aggregatstützen (9,11) und/oder an einer der weiteren Aggregatstützen (10,12) starr befestigten Lagerkonsole (17) ein Lager (18) befestigt ist, über das der jeweilige Lenker (14,15,16) an der jeweiligen Aggregatstütze (9,11) und/oder an der jeweiligen weiteren Aggregatstützen (10,12) angelenkt ist.

3. Einzelradantriebseinrichtung nach Anspruch 2, **dadurch gekennzeichnet, dass** das Lager (18) als Gummilager, Gummimetalllager oder als Kugelgelenklager ausgestaltet ist.

4. Einzelradantriebseinrichtung nach einem der vorhergehenden Ansprüche, **dadurch gekennzeichnet, dass** die Aggregatstützen (9,11) und/oder die weiteren Aggregatstützen (10,12) zumindest bereichsweise ein Rohrprofil aufweisen.

5. Einzelradantriebseinrichtung nach einem der vorhergehenden Ansprüche, **dadurch gekennzeichnet, dass** an dem Antriebsaggregat (2) Befestigungsflansche (7,8) ausgebildet sind, an denen die Aggregatstützen (9,11) und/oder die weiteren Aggregatstützen (10,12) befestigt sind.

6. Einzelradantriebseinrichtung nach einem der vorhergehenden Ansprüche, **dadurch gekennzeichnet, dass** eine der Aggregatstützen (9,11) und eine der weiteren Aggregatstützen (10,12) separat voneinander oder über einen gemeinsamen Befestigungsfuß an dem Antriebsaggregat (2) befestigt sind.

7. Einzelradantriebseinrichtung nach einem der vorhergehenden Ansprüche, **dadurch gekennzeichnet, dass** einer der Lenker (14,15,16) sowohl an der Aggregatstütze (9,11) als auch der weiteren Aggregatstütze (10,12) angelenkt ist.

8. Einzelradantriebseinrichtung nach einem der vorhergehenden Ansprüche, **dadurch gekennzeichnet, dass** eine der Aggregatstützen (9,11) und eine der weiteren Aggregatstützen (10,12) durch einstückige und materialeinheitliche Ausgestaltung gemeinsam als ein Aggregatstützbauteil vorliegen.

9. Kraftfahrzeug mit einer Einzelradantriebseinrichtung (1) nach einem oder mehreren der vorhergehenden Ansprüche.

## Claims

1. Single-wheel drive component (1) for a motor vehicle, wherein the single-wheel drive component (1) has a drive unit (2) and a hub carrier, wherein a wheel hub which can be driven by the drive unit (2) is mounted rotatably by means of a wheel bearing on the hub carrier, wherein several unit supports (9, 11) and several further unit supports (10, 12) for mounting the drive unit (2) to a vehicle body of the motor vehicle emanate from the drive unit (2), wherein on the unit supports (9, 11) and the further unit supports (10, 12) is arranged in each case one unit bearing (13) for the resilient mounting of the drive unit (2) on the vehicle body, **characterised in that** for mounting the hub carrier on the unit supports (9, 11) and the further unit supports (10, 12), several links (14, 15, 16) are provided which, respectively, are articulated on the one hand on the hub carrier and on the other hand on at least one of the unit supports (9, 11) and the further unit supports (10, 12), wherein on all of the unit supports (9, 11) and the further unit supports (10, 12) is articulated respectively at least one link (14, 15, 16) of the several links (14, 15, 16).

2. Single-wheel drive component according to claim 1, **characterised in that** on a bearing bracket (17) fixed rigidly on one of the unit supports (9, 11) and/or on one of the following unit supports (10,12) is fastened a bearing (18) via which the respective link (14, 15, 16) is articulated on the respective unit support (9, 11) and/or on the respective further unit support (10, 12).

3. Single-wheel drive component (1) according to claim 2, **characterised in that** the bearing (18) is designed as a rubber bearing, rubber-metal bearing or as a ball-and-socket bearing.

4. Single-wheel drive component (1) according to any of the preceding claims, **characterised in that** the unit supports (9, 11) and/or the further unit supports (10, 12) have at least in some areas a pipe profile.

5. Single-wheel drive component (1) according to any of the preceding claims, **characterised in that** fastening flanges (7, 8) are formed on the drive unit (2), to which the unit supports (9, 11) and/or the further unit supports (10, 12) are fastened.

6. Single-wheel drive component (1) according to any of the preceding claims, **characterised in that** one of the unit supports (9, 11) and one of the further unit supports (10, 12) are fastened to the drive unit (2) separately from one another or via a common fastening foot.

7. Single-wheel drive component (1) according to any of the preceding claims, **characterised in that** one of the links (14, 15, 16) is articulated both on the unit support (9, 11) and on the further unit support (10, 12).

8. Single-wheel drive component (1) according to any of the preceding claims, **characterised in that** by means of integral and materially-integral design, one of the unit supports (9, 11) and one of the further unit supports (10, 12) are present as one unit support component.

9. Motor vehicle having a single-wheel drive component (1) according to one or more of the preceding claims.

## Revendications

1. Dispositif d'entraînement de roue individuelle (1) pour un véhicule automobile, dans lequel le dispositif d'entraînement de roue individuelle (1) dispose d'un groupe d'entraînement (2) et d'un support de roue, dans lequel un support de roue pouvant être entraîné par le groupe d'entraînement (2) est monté de manière rotative sur le support de roue au moyen d'un palier de roue, dans lequel plusieurs supports de groupe (9, 11) ainsi que plusieurs supports de groupe supplémentaires (10, 12) émanent du groupe d'entraînement (2) pour le montage du groupe d'entraînement (2) sur une carrosserie du véhicule automobile, dans lequel un palier de groupe (13) est respectivement disposé pour le montage élastique du groupe d'entraînement (2) sur la carrosserie, **caractérisé en ce que** plusieurs bielles (14, 15, 16) sont prévues pour le montage du support de roue sur les supports de groupe (9, 11) et les supports de groupe supplémentaires (10, 12), qui sont respectivement articulés d'une part sur le support de roue et d'autre part sur au moins un des supports de groupe (9, 11) et des supports de groupe supplémentaires (10, 12), dans lequel au moins une bielle (14, 15, 16) de la pluralité de bielles (14, 15, 16) est respectivement articulée sur tous les supports de groupe (9, 11) et les supports de groupe supplémentaires (10, 12).

2. Dispositif d'entraînement de roue individuelle selon la revendication 1, **caractérisé en ce qu'**un palier (18) est fixé à une console de palier (17) fixée de manière rigide à un des supports de groupe (9, 11) et/ou à un des supports de groupe supplémentaires (10, 12), par l'intermédiaire duquel la bielle respective (14, 15, 16) est articulée sur le support de groupe respectif (9, 11) et/ou sur le support de groupe respectif supplémentaire (10, 12).

3. Dispositif d'entraînement de roue individuelle selon la revendication 2, **caractérisé en ce que** le palier (18) est conçu en tant que palier en caoutchouc, un palier en caoutchouc-métal ou un palier à rotule.

4. Dispositif d'entraînement de roue individuelle selon l'une quelconque des revendications précédentes, **caractérisé en ce que** les supports de groupe (9, 11) et/ou les supports de groupe supplémentaires (10, 12) présentent au moins par zones un profil tubulaire.

5. Dispositif d'entraînement de roue individuelle selon l'une quelconque des revendications précédentes, **caractérisé en ce que** des brides de fixation (7, 8) sont conçues sur le groupe d'entraînement (2), sur lesquelles les supports de groupe (9, 11) et/ou les supports de groupe supplémentaires (10, 12) sont fixés.

6. Dispositif d'entraînement de roue individuelle selon l'une quelconque des revendications précédentes, **caractérisé en ce qu'**un des supports de groupe (9, 11) et un des supports de groupe supplémentaires (10, 12) sont fixés au groupe d'entraînement (2) séparément l'un de l'autre ou par l'intermédiaire d'un pied de fixation commun.

7. Dispositif d'entraînement de roue individuelle selon l'une quelconque des revendications précédentes, **caractérisé en ce qu'**une des bielles (14, 15, 16) est articulée à la fois sur le support de groupe (9, 11) et sur le support de groupe supplémentaire (10, 12).

8. Dispositif d'entraînement de roue individuelle selon l'une quelconque des revendications précédentes, **caractérisé en ce qu'**un des supports de groupe (9, 11) et un des supports de groupe supplémentaire (10, 12) se présentent ensemble comme un composant de support de groupe par une conception d'un seul tenant et d'un seul matériau.

9. Véhicule automobile avec un dispositif d'entraînement de roue individuelle (1) selon une ou plusieurs des revendications précédentes.
